# EUROPÄISCHE PATENTANMELDUNG

(11) **EP 1 319 955 A1**
(43) Veröffentlichungstag der Anmeldung: **18.06.2003**
(21) Anmeldenummer: 01811223.5
(22) Anmeldetag: 13.12.2001
(51) Int. Cl.: G01R 31/08, G01N 27/90, G01N 27/20

(54) **Verfahren und Vorrichtung zur Qualitätsprüfung verseilter Drähte zur Herstellung von Spulen**

(71) Anmelder: ABB RESEARCH LTD., 8050 Zürich (CH)
(72) Erfinder: Sabbattini, Bruno, 5430 Wettingen (CH); Lehmann, Josef, 79761 Waldshut-Tiengen (DE); Doser, Bernhard, 79761 Waldshut-Tiengen (DE); Rhyner, Jakob, 7270 Davos (CH)
(74) Vertreter: ABB Patent Attorneys

(57) **Zusammenfassung**

Zum Ermitteln der Qualität eines Leiters (1) mit mehreren Drähten aus einer Aluminium-Legierung wird ein magnetisches Wechselfeld und/oder eine Wechselspannung an diesen angelegt. Die so erzeugten Wirbelströme sind ein Mass für die Qualität der Oxidschicht auf den Drähten und zeigen somit an, wie gut der Leiter insbesondere zum Einsatz in einer Starkstrom-Spule geeignet ist.

## Beschreibung

### Technisches Gebiet

Die Erfindung bezieht sich auf ein Verfahren und eine Vorrichtung zur Qualitätsprüfung von verseiltem Wickelgut, d.h. zur Prüfung der Qualität von Leitern aus verseilten Drähten zur Herstellung von Spulen, gemäss Oberbegriff von Anspruch 1.

### Hintergrund

Unter verseiltem Wickelgut sind Leiter zu verstehen, die aus mehreren, miteinander verseilten Drähten bestehen, und die verwendet werden, um Spulen z.B. für die Starkstromtechnik zu wickeln. Die Drähte können z.B. helixartig um die Achse des Leiters verlaufen. Es sind jedoch auch kompliziertere Verseilungsgeometrien denkbar. Die Drähte, welche vorzugsweise aus einer Aluminiumlegierung bestehen, sind voneinander durch eine Oxidschicht isoliert.

Spulen aus derartigem Wickelgut werden in der Starkstromtechnik z.B. für Hochfrequenz-Filter benutzt.

Bisher wurde die Qualität solcher Spulen geprüft, indem ihre Verluste gemessen wurden. Bei zu hohen Verlusten konnte eine Spule nicht eingesetzt werden.

### Darstellung der Erfindung

Vor diesem Hintergrund stellt sich die Aufgabe, ein Verfahren bzw. eine Vorrichtung der eingangs genannten Art bereitzustellen, welche eine frühzeitige Erkennung von Qualitätsmängel im Herstellungsprozess erlauben.

Diese Aufgabe wird von den unabhängigen Ansprüchen gelöst. Erfindungsgemäss wird also vor dem Aufwickeln auf die Spule ein Parameter gemessen, der vom Wechselspannungs-Leitfähigkeitswert des Leiters abhängt. Diese Lösung basiert auf der Erkenntnis, dass die Qualität der Spule darunter leidet, dass bei der Herstellung des Leiters oftmals die Isolations- bzw. Oxidschicht der Drähte beschädigt wird, wodurch aufgrund eines dem Skin-Effekt ähnlichen Stromverdrängungseffekts die Verluste grösser werden. Eine Beschädigung der Oxidschicht führt zu einer Änderung der Wechselstrom-Leitfähigkeit des Leiters, so dass sie durch Messung eines entsprechenden Parameters festgestellt werden kann.

Vorzugsweise wird bei der Messung an den Leiter ein magnetisches Wechselfeld angelegt, womit die Abhängigkeit der Leitfähigkeit von Oberflächendefekten der Drähte verstärkt wird und eine empfindlichere Messung erzielt werden kann. Um die Feldverhältnisse in der herzustellenden Spule nachzubilden, steht das magnetische Wechselfeld vorzugsweise senkrecht zur Längsachse des Leiters.

Vorzugsweise wird bei der Qualitätsprüfung die Dämpfung des magnetischen Wechselfeldes ermittelt. Hierzu kann z.B. die Impedanz der Quellspule gemessen werden, die das Wechselfeld erzeugt, oder es kann zusätzlich zur Quellspule eine Messspule vorgesehen sein, mit der die Dämpfung ermittelt wird.

In einer weiteren Ausführung kann an einen Teilabschnitt des Leiters eine Wechselspannung angelegt und ein von dieser im Leiter erzeugter Strom gemessen werden.

Eine Vorrichtung zur Durchführung des beschriebenen Verfahrens besitzt Messmittel zur Erzeugung einer elektrischen Wechselspannung und/oder eines magnetischen Wechselfeldes im Leiter und zur Messung des Parameters. Vorzugsweise ist sie ferner mit einem fixen Rahmen und einen beweglichen Messkopf ausgestattet, wobei der Messkopf Mittel zur Führung des Messkopfs auf dem Leiter aufweist, so dass der Messkopf Bewegungen des Leiters senkrecht zur Längsachse des Leiters folgen kann.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 einen Leiter in schematischer Darstellung mit mehreren verseilten Drähten,
Fig. 2 eine schematische Ansicht einer ersten Ausführung der Erfindung,
Fig. 3 eine schematische Ansicht einer zweiten Ausführung der Erfindung,
Fig. 4 eine schematische Ansicht einer dritten Ausführung der Erfindung,
Fig. 5 eine schematische Ansicht einer vierten Ausführung der Erfindung,
Fig. 6 den schematischen Aufbau einer Vorrichtung mit beweglichem Messkopf in einer Ansicht parallel zur Längsachse des Leiters,
Fig. 7 eine schematische Ansicht einer weiteren Ausführung der Erfindung,
Fig. 8 eine Ausführung der Erfindung mit drehbarer Spule in einer Ansicht parallel zur Spulenachse,
Fig. 9 eine schematische Ansicht einer Ausführung basierend auf dem Anlegen einer Wechselspannung und

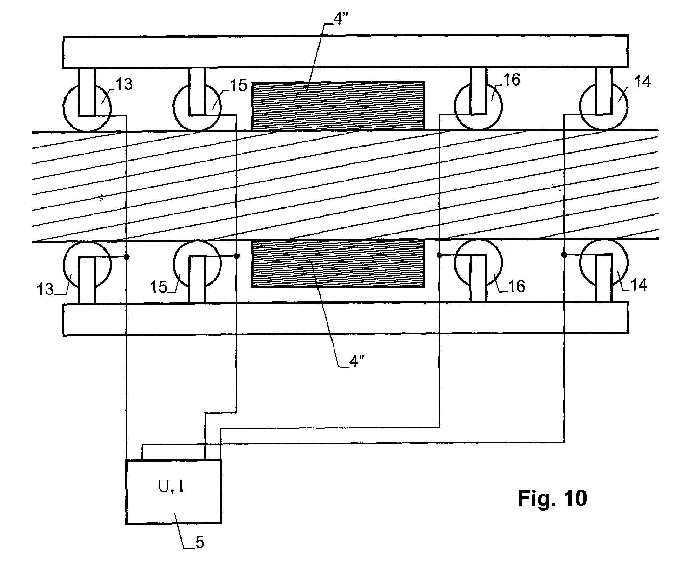

Fig. 10 eine Alternative zur Ausführung von Fig. 9.

### Wege zur Ausführung der Erfindung

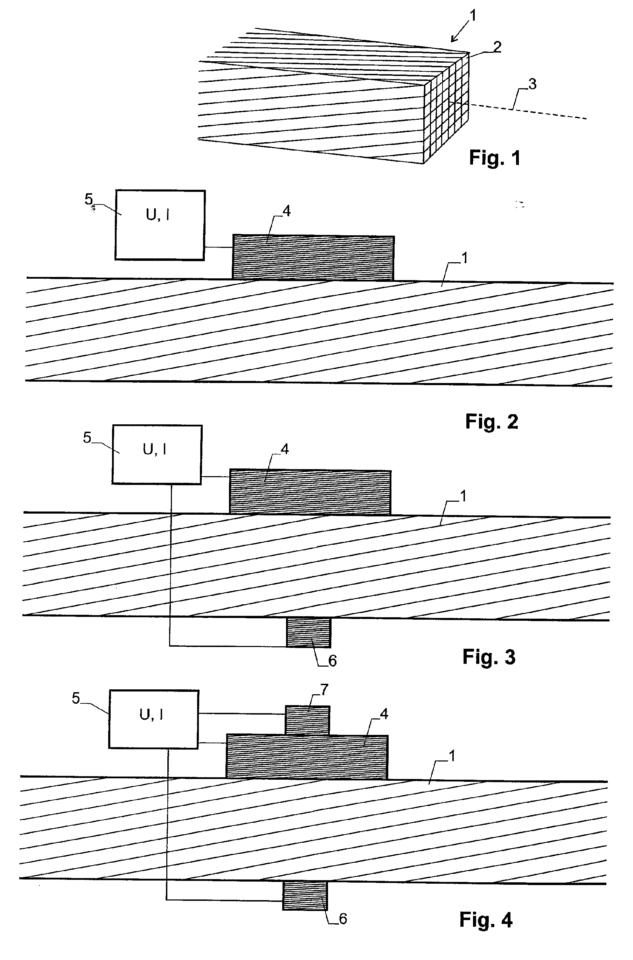

Fig. 1 zeigt schematisch einen Leiter 1 aus einer Vielzahl von Drähten 2, die helixartig um die Längsachse 3 des Leiters verseilt sind. In der gezeigten Ausführung besitzt der Leiter 1 rechteckigen bzw. quadratischen Querschnitt. Die einzelnen Drähte können rund oder ebenfalls fast rechteckig bzw. quadratisch sein. Sie bestehen aus einer Aluminium-Legierung und sind von einer dünnen Oxidschicht bedeckt. Der Querschnitt des Leiters 1 ist so bemessen, dass der Leiter 1 hohe Ströme aufnehmen kann, wie sie insbesondere in der Starkstromtechnik üblich sind.

Der Leiter 1 wird zu einer Spule aufgewickelt, die z.B. in eine Hochspannungsleitung eingesetzt wird, um hohe Frequenzen abzublocken. Da in einer derartigen Spule sehr hohe magnetische Felder herrschen, werden Stromverdrängungseffekte verstärkt und es ist von grosser Bedeutung, dass die Oxidschicht auf den Drähten möglichst intakt ist, da es sonst zu zusätzlichen Verlusten in der Spule kommt.

Um einen Defekt in der Oxidschicht frühzeitig zu detektieren, wird das erfindungsgemässe Messverfahren eingesetzt, welches im Folgenden beschrieben wird. In diesem Verfahren wird die Qualität des Leiters 1 bestimmt, bevor er zur Spule gewickelt wird.

In einer ersten Ausführung des Verfahrens wird eine Spule, im folgenden Quellspule 4 genannt, an eine Aussenseite des Leiters 1 angenähert und vorzugsweise an diese angedrückt. Die Achse der Quellspule 4 ist dabei so ausgerichtet, dass sie den Leiter 1 durchsetzt und vorzugsweise senkrecht zu dessen Aussenseite steht. Die Quellspule 4 wird von einer Speise- und Messeinrichtung 5 mit einem Wechselstrom durchflossen, so dass ein magnetisches Wechselfeld entsteht, welches in den Leiter 1 eindringt. Dieses induziert im Leiter 1 Wirbelströme, deren Grösse von der mittleren Leitfähigkeit des Leiters abhängt. Diese hängt ihrerseits davon ab, wie gut die einzelnen Drähte 2 voneinander isoliert sind bzw. wie der Zustand der die Leiter bedeckenden Oxidschichten ist. Die Wirbelströme führen zu einer Dämpfung des magnetischen Wechselfeldes. Durch eine Messung dieser Dämpfung kann die mittlere Leitfähigkeit bzw. der Zustand der Oxidschichten ermittelt werden.

In der Ausführung nach Fig. 2 kann z.B. die komplexe Impedanz Z = U/I der Quellspule 4 bzw. ein davon abhängiger Wert, wie z.B. deren Absolutwert oder Phase, ermittelt werden, indem vorzugsweise die Amplituden und/oder die Phasenverschiebung der Spannung U über der Quellspule 4 und des Stroms I durch die Quellspule 4 gemessen werden. Sind die Wirbelstromverluste hoch bzw. ist das magnetische Wechselfeld stark gedämpft, so wird insbesondere der Realanteil der Impedanz Z grösser. Überschreitet der Messwert eine, z.B. experimentell ermittelte, Grenze so wird die Qualität des Leiters 1 als unzureichend eingestuft.

Eine zweite Ausführung der Erfindung ist in Fig. 3 dargestellt. Hier wird wiederum ein magnetisches Wechselfeld von der Quellspule 4 erzeugt. Zur Messung ist jedoch eine zusätzliche Messspule 6 vorgesehen. Die Messspule 6 und die Quellspule 4 sind auf gegenüberliegenden Seiten des Leiters 1 angeordnet und vorzugsweise koaxial. Mindestens eine der Spulen, vorzugsweise die Messspule 6, hat einen Durchmesser, der kleiner als die Breite des Leiters ist, und sie ist so angeordnet, dass sie nur von solchen Feldlinien des Wechselfeldes durchsetzt wird, die auch den Leiter 1 durchsetzen.

In dieser Messung wird der Strom und/oder die Spannung durch die Messspule 6 gemessen und mit dem Strom und/oder der Spannung der Quellspule 4 verglichen. Vorzugsweise werden die jeweiligen Phasen verglichen, es ist jedoch auch ein Vergleich der Amplituden möglich. Zunehmende Wirbelstromverluste im Leiter 1 bzw. ein Anstieg der mittleren Leitfähigkeit des Leiters 1 führen dazu, dass sich die Phasenlage und die Amplitudenverhältnisse der Signale ändern. Auch hier kann also die Messgrösse mit einem Grenzwert verglichen werden um die Qualität des Leiters 1 zu ermitteln.

Um eine genauere Messung zu erhalten kann, wie in Fig. 4 dargestellt, eine Referenzspule 7 verwendet werden, welche die Grösse und/oder Phasenlage des Wechselfelds misst, das von der Quellspule 4 erzeugt wird, bevor dieses in den Leiter 1 eintritt. Hierzu wird die Referenzspule 7 vorzugsweise auf der gleichen Seite wie die Quellspule 4 und koaxial zu dieser angeordnet. In diesem Fall werden die Amplituden und/oder Phasen der Spannung und/oder des Stroms in der Messspule 6 und der Referenzspule 7 miteinander verglichen.

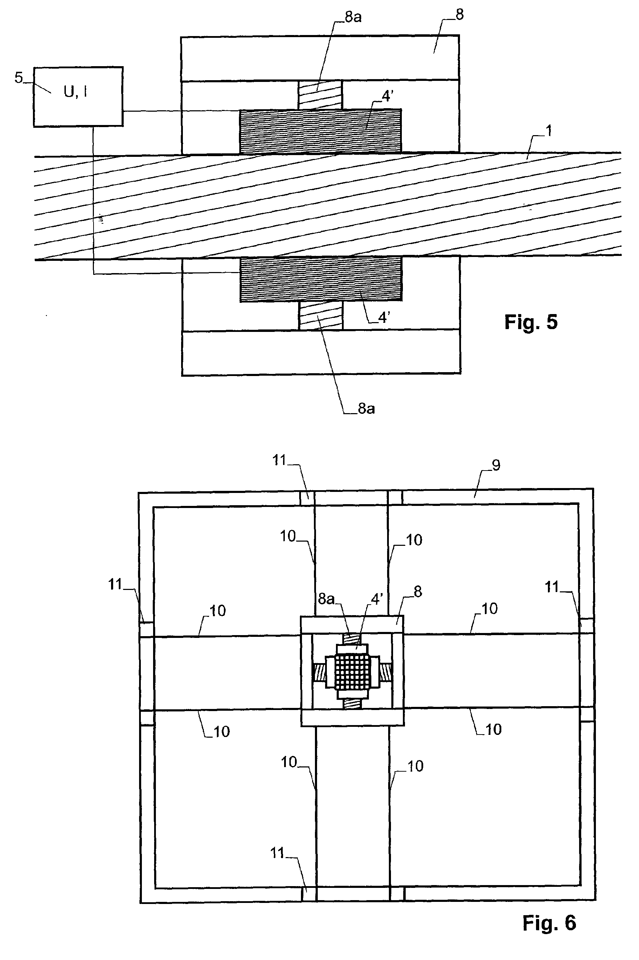

Fig. 5 zeigt eine Anordnung mit zwei Spulen 4', die auf gegenüberliegenden Seiten des Leiters 1 angeordnet sind. Sie sind in einem Messkopf 8 angeordnet und werden von Federn 8a gegen den Leiter 1 gedrückt. In dieser Ausführung kann z.B. eine der Spulen 4' als Quellspule und die andere als Messspule gemäss der zweiten Ausführung der Erfindung dienen, wobei die Rollen auch abwechslungsweise vertauscht werden können, oder jede Spule 4' dient sowohl zur Erzeugung des magnetischen Wechselfeldes als auch zu dessen Messung gemäss der ersten Ausführung.

Es ist, insbesondere bei einem Leiter 1 mit rechteckigem bzw. quadratischem Querschnitt, möglich auch auf allen vier Aussenseiten je eine Spule 4' anzuordnen, wie dies in Fig. 6 dargestellt ist. Auf diese Weise kann eine noch genauere Messung durchgeführt werden. Dabei können einzelne Spulen oder Spulenpaare auch zeitlich oder räumlich versetzt betrieben werden, so dass sich deren Signale nicht gegenseitig stören.

In der Ausführung nach Fig. 6 ist der Messkopf 8 in einem fixen Rahmen 9 angeordnet, wobei zur Verbindung von Messkopf 8 und Rahmen 9 vorgespannte, längenveränderbare Drahtzüge 10 vorgesehen sind, die rahmenseitig auf verfahrbaren Schlitten 11 ruhen. Die Gegen den Leiter 1 gedrückten Spulen 4' bilden dabei eine Führung des Messkopfs 8 auf dem Leiter 1, so dass dieser dank der beweglichen Lagerung mittels Drahtzügen 10 und Schlitten 11 den Bewegungen des Leiters folgen kann. Eine derartige Anordnung kann z.B. für die Prüfung des Leiters 1 unmittelbar vor dem Aufrollen auf eine Trommel angeordnet werden.

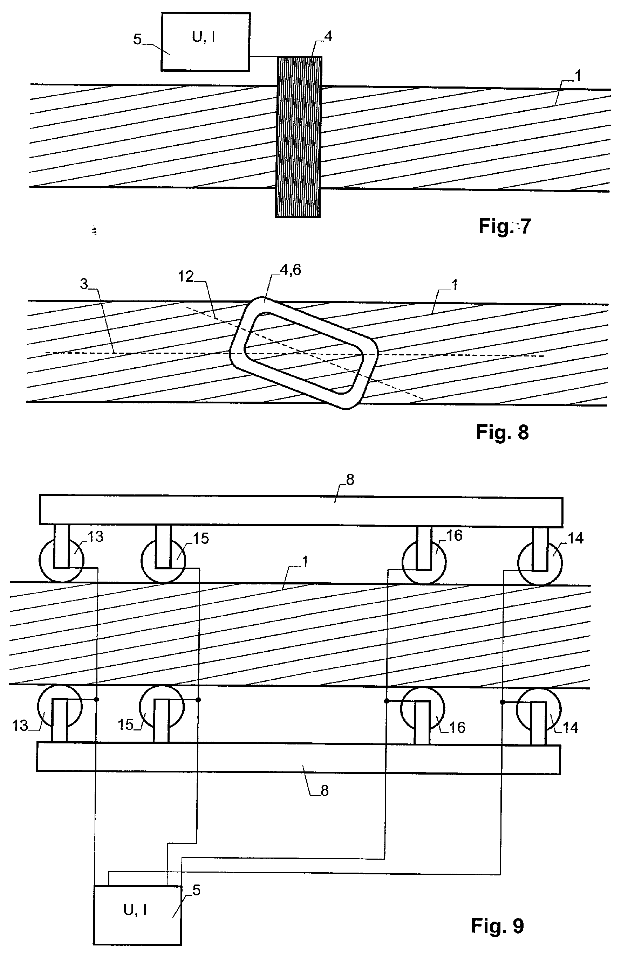

Eine weitere Ausführung der Erfindung wird in Fig. 7 dargestellt. Hier wird die Quellspule 4 um den Leiter 1 gelegt, d.h. der Leiter 1 und die Quellspule 4 sind koaxial angeordnet. Auch in dieser Ausführung kann z.B. die Impedanz der Quellspule 4 gemessen werden. Sie hat den Vorteil, dass die Wirbelströme 4 im Leiter ungefähr senkrecht zu den Oberflächen der Drähte 2 liegen und somit besonders empfindlich auf Störungen der Oxidschicht reagieren. Die Ausführungen, bei welchen das magnetische Wechselfeld quer, insbesondere senkrecht zur Leiterachse 3 liegt, haben ihrerseits den Vorteil, dass eine Situation geschaffen wird, die jener in der herzustellenden Spule ähnlich ist.

Um verschiedene Leiter 1 mit unterschiedlicher Grösse zu messen, kann eine Vorrichtung gemäss Fig. 8 verwendet werden. Hier ist die Quell- und/oder die Messspule 4 bzw. 6 länglich ausgestaltet. Sie kann um die Spulenachse gedreht werden. Somit kann durch Einstellen des Winkels zwischen Längsachse 12 der Spule und Leiterachse 3 die Messbreite stufenlos eingestellt werden.

In den bisher beschriebenen Ausführungsbeispielen wurde ein magnetisches Wechselfeld an den Leiter angelegt und eine von der Dämpfung des Wechselfelds bzw. von der Grösse der induzierten Wirbelströme abhängige Grösse gemessen. Auf einen Qualitätsmangel wurde geschlossen, wenn die Grösse anzeigt, dass die Dämpfung bzw. die Wirbelströme einen bestimmten Wert überschreiten.

In einer weiteren Ausführung kann auch eine Wechselspannung an den Leiter angelegt werden, wie dies in Fig. 9 dargestellt ist. Hier sind im Messkopf 8 insgesamt vier Elektroden vorgesehen, die aus je zwei Rollen 13 - 16 bestehen. Zwischen der ersten Elektrode mit den Rollen 13 und der zweiten Elektrode mit den Rollen 14 wird über dem entsprechenden Teilabschnitt des Leiters 1 ein von der Speise- und Messeinrichtung 5 gelieferter Wechselstrom aufgeprägt. Dieser liegt in Längsrichtung zum Leiter 1. Die dritte und die vierte Elektrode mit den Rollen 15 bzw. 16 sind zwischen der ersten und der zweiten Elektrode angeordnet. Die Spannung über diesen Elektroden wird von der Speise- und Messeinrichtung 5 gemessen.

Da der eingeprägte Strom ein Wechselstrom ist, ist die abfallende Spannung aufgrund des Skin-Effekts abhängig davon, wie gut die einzelnen Drähte 2 des Leiters 1 voneinander isoliert sind. Ist die Isolation sehr schlecht, so fliesst der grösste Teil des Stroms nur in den äussersten Drähten und der Widerstand nimmt zu. Somit steigt z.B. bei vorgegebenem Strom zwischen der ersten und der zweiten Elektrode die Spannung über dritten und vierten Elektrode, so dass ein Qualitätsmangel festgestellt werden kann.

Dank Verwendung einer Vierpunktmessung mit vier Elektroden kann nicht nur der Spannungsabfall über den Zuleitungen zur ersten und zweiten Elektrode ignoriert werden, sondern diese Anordnung hat weiter den Vorteil, dass dank dem Abstand zwischen erster und dritter bzw. zweiter und vierter Elektrode im Bereich der dritten und vierten Elektroden eine möglichst homogene Stromverteilung im Leiter gewährleistet ist. Würde nur die Spannung über der ersten und zweiten Elektrode gemessen, so würden Inhomogenitäten der Stromdichte im Bereich der Elektroden die Messung verfälschen.

Bei der Anordnung nach Fig. 9 ist zu berücksichtigen, dass ein Teil des Stroms nicht über den gemessenen Teilbereich des Leiters 1, sondern aussen herum, z.B. über Erde, fliesst. Dieser Stromanteil kann vorab z.B. in einer Eichmessung bestimmt werden.

Der effektiv im Leiter fliessende Strom kann auch mit einer in der Mitte des Teilbereichs um den Leiter 1 gelegten Spule bzw. Stromzange gemessen werden. Durch diese Massnahme wird die Messung davon unabhängig, wieviel Strom "aussen herum", d.h. nicht über den Teilbereich, zwischen der ersten und zweiten Elektrode fliesst.

Um die Empfindlichkeit des Verfahrens nach Fig. 9 zu verbessern, kann zusätzlich mit einer oder zwei Spulen 4" ein magnetisches Wechselfeld im Leiter erzeugt werden. Dieses weist die gleiche Frequenz auf wie die Wechselspannung und steht vorzugsweise, wie später in der Spule, senkrecht zur Längsachse 3 des Leiters 1. Mit einem derartigen zusätzlichen magnetischen Wechselfeld können im Leiter Wirbelströme erzeugt werden, die die Stromverdrängung verstärken.

In allen soweit beschriebenen Messverfahren entsprechen die Frequenzen der Wechselfelder bzw. der Wechselspannung vorzugsweise der späteren Betriebsfrequenz des Leiters, d.h. in der Regel 50 oder 60 Hz bei Starkstromanwendungen, so dass eine möglichst realistische Messung durchgeführt wird. Es können jedoch auch andere Frequenzen oder frequenzabhängige Messungen durchgeführt werden um z.B. eine tiefenabhängige Messung durchzuführen.

Die Messungen können verwendet werden um einen Alarm auszugeben, wenn der Leiter gewissen Qualitätsanforderungen nicht genügt. Sie können auch dazu dienen, dem Leiter einen Qualitätsparameter zuzuordnen und/oder z.B. den Widerstand der zu erstellenden Spule im voraus abzuschätzen.

Die Messungen werden vorzugsweise nach dem Verseilen des Leiters 1 durchgeführt, bevor der Leiter 1 auf eine Transportrolle aufgerollt wird. Sie können jedoch alternativ oder zusätzlich auch unmittelbar vor dem Wickeln der Spule erfolgen. Die Verfahren können am laufenden Leiter durchgeführt werden, ohne dass der Produktionsprozess verzögert wird.

### Bezugszeichenliste

- 1:: Leiter
- 2:: Drähte
- 3:: Längsachse des Leiters
- 4:: Quellspule
- 5:: Speise- und Messeinrichtung
- 6:: Messspule
- 7:: Referenzspule
- 8:: Messkopf
- 8a:: Federn
- 9:: Rahmen
- 10:: Drahtzüge
- 11:: Schlitten
- 12:: Längsachse der Spule
- 13, 14, 15, 16:: Rollen der Elektroden

## Patentansprüche

1. Verfahren zur Prüfung der Qualität eines Leiters zur Herstellung einer Spule, wobei der Leiter (1) zur Reduktion von Stromverdrängungseffekten mehrere verseilte, durch eine Isolationschicht voneinander getrennte Drähte (2) aufweist, **dadurch gekennzeichnet, dass** vor dem Aufwickeln des Leiters (1) auf die Spule ein vom Wechselspannungs-Leitfähigkeitswert des Leiters (1) abhängiger Parameter (Z) gemessen wird.

2. Verfahren nach Anspruch 1, **dadurch gekennzeichnet, dass** beim Messen des Parameters am Leiter (1) ein magnetisches Wechselfeld angelegt wird.

3. Verfahren nach Anspruch 2, **dadurch gekennzeichnet, dass** das magnetische Wechselfeld quer, insbesondere senkrecht, zu einer Längsachse (3) des Leiters (1) angelegt wird.

4. Verfahren nach einem der Ansprüche 2 oder 3, **dadurch gekennzeichnet, dass** zum Messen des Parameters eine von einer Dämpfung des magnetischen Wechselfeldes abhängige Grösse bestimmt wird.

5. Verfahren nach einem der Ansprüche 2 bis 4, **dadurch gekennzeichnet, dass** das magnetische Wechselfeld von einer Quellspule (4) erzeugt wird, wobei ein von der Impedanz (Z) der Quellspule (4) abhängiger Messwert ermittelt wird.

6. Verfahren nach einem der Ansprüche 2 bis 4, **dadurch gekennzeichnet, dass** das magnetische Wechselfeld von einer Quellspule (4) erzeugt und die Dämpfung des magnetischen Wechselfelds im Leiter (1) mit einer Messspule (6) ermittelt wird, wobei vorzugsweise die Quellspule (4) und die Messspule (6) an gegenüberliegenden Seiten des Leiters (1) angeordnet werden.

7. Verfahren nach einem der Ansprüche 5 oder 6, **dadurch gekennzeichnet, dass** zusätzlich zur Quellspule (4) eine Referenzspule (7) verwendet wird, mit der eine Grösse und/oder Phasenlage des magnetischen Wechselfelds ohne Dämpfung durch den Leiter (1) ermittelt wird, wobei vorzugsweise die Quellspule (4) und die Referenzspule (7) auf der gleichen Seite des Leiters (1) angeordnet werden.

8. Verfahren nach einem der Ansprüche 5 - 7, **dadurch gekennzeichnet, dass** der Leiter (1) rechteckigen oder quadratischen Querschnitt mit vier Aussenseiten aufweist und die Quellspule (4) und gegebenenfalls die Messspule (6) an eine der Aussenseiten angedrückt werden.

9. Verfahren nach einem der Ansprüche 2 - 8, **dadurch gekennzeichnet, dass** mit dem magnetischen Wechselfeld Wirbelströme im Leiter (1) erzeugt werden und dass auf einen Qualitätsmangel gefolgert wird, wenn die Wirbelströme eine vorgegebene Grösse überschreiten.

10. Verfahren nach einem der vorangehenden Ansprüche, **dadurch gekennzeichnet, dass** in einen Teilabschnitt des Leiters (1) ein Wechselstrom eingeprägt wird und ein vom Wechselstrom im Leiter (1) erzeugter Spannungsabfall ermittelt wird.

11. Verfahren nach Anspruch 10, **dadurch gekennzeichnet, dass** zusätzlich zum Wechselstrom ein magnetisches Wechselfeld gleicher Frequenz an den Teilabschnitt angelegt wird, und insbesondere dass das magnetische Wechselfeld senkrecht zu einer Längsachse (3) des Leiters (1) steht.

12. Verfahren nach Anspruch 11, **dadurch gekennzeichnet, dass** am Anfang und Ende des Teilabschnitts des Leiters (1) mindestens eine erste bzw. zweite Elektrode (13, 14) angeordnet werden, über die der Wechselstrom in Leiter (1) eigeprägt wird, und dass zwischen der ersten und der zweiten Elektrode eine Messvorrichtung (15, 16) für den vom Wechselstrom erzeugten Spannungsabfall angeordnet wird, wobei die Elektroden vorzugsweise Rollen aufweisen, welche den Leiter (1) beidseitig beaufschlagen.

13. Verfahren nach einem der vorangehenden Ansprüche, **dadurch gekennzeichnet, dass** die Drähte (2) aus einer Aluminium-Legierung bestehen.

14. Verfahren nach einem der vorangehenden Ansprüche, **dadurch gekennzeichnet, dass** die Isolationsschicht eine Oxidschicht ist.

15. Vorrichtung zur Durchführung des Verfahrens nach einem der vorangehenden Ansprüche, **dadurch gekennzeichnet, dass** sie Messmittel (5) zur Erzeugung einer elektrischen Wechselspannung und/oder eines magnetischen Wechselfeldes im Leiter (1) und zur Messung des Parameters aufweist.

16. Vorrichtung nach Anspruch 15, **dadurch gekennzeichnet, dass** sie einen fixen Rahmen (9) und einen beweglichen Messkopf (8) aufweist, wobei der Messkopf (8) Mittel (4', 8a) zur Führung des Messkopfs (8) auf dem Leiter (1) aufweist, derart, dass der Messkopf (8) Bewegungen des Leiters (1) senkrecht zur Längsachse des Leiters (1) folgt.

17. Vorrichtung nach einem der Ansprüche 15 oder 16, **dadurch gekennzeichnet, dass** sie eine Quellspule oder Messspule (4, 6) zur Erzeugung und/oder zum Messen des magnetischen Wechselfeldes aufweist, wobei die Quell- bzw. Messspule (4, 6) einen länglichen Querschnitt mit Längsachse (12) aufweist und zum Einstellen einer Messbreite der Winkel zwischen Leiter (1) und Längsachse (12) änderbar ist.
